# EUROPEAN PATENT APPLICATION

(11) **EP 1 593 821 A2**
(43) Date of publication of application: **09.11.2005**
(21) Application number: 05004973.3
(22) Date of filing: 08.03.2005
(51) Int. Cl.: F01L 1/344

(54) **Spline phased multiple sprocket**

(30) Priority: 19.03.2004 US 554678 P
(71) Applicant: BorgWarner Inc., Auburn Hills, MI 48326-2872 (US)
(72) Inventor: Ledvina, Timothy, Groton New York 13073 (US); Young, Roger, Lansing New York 14882 (US); Deming, Jessica, Ithaca New York 14850 (US)
(74) Representative: Petruzziello, Aldo

(57) **Abstract**

Multiple sprocket for transmission of power from a splined shaft to at least two chains, the multiple sprocket comprising a first half-sprocket (200) and at least one second half sprocket (212). The first half-sprocket (200) has a toothed outer circumference for mating with a chain, an inner splined bore (204) for mating with a shaft, and an integral raised portion (232) and an opposing recessed portion (230) on at least one face. The second half-sprocket has a toothed outer circumference for mating with a chain, an inner splined bore (216) for mating with a shaft, and an integral raised portion (234) and an opposing recessed portion (236) on at least one face. The integral raised portion (232) of the first half-sprocket is received by the recessed portion (236) of the second half-sprocket (212) and the recessed portion (230) of the first half sprocket (200) receives the integral raised portion (234) of the second half-sprocket (212), joining the first half-sprocket (200) to the second half-sprocket (212) in a phased relationship.

## Description

### BACKGROUND OF THE INVENTION

### FIELD OF THE INVENTION

The invention pertains to the field of power transmission chains. More particularly, the invention pertains to a phased sprocket of multiple pieces for use with a power transmission chain.

### DESCRIPTION OF RELATED ART

In a conventional power transmission system, an endless chain is wrapped around at least two sprockets, each of which are supported by shafts. Rotation of the driving sprocket causes power transmission through the chain and results in the movement of the driven sprocket. Different combinations, placement, and connection of sprockets have been used in prior power transmission systems to decrease the noise and vibration generated by the contact between the sprockets and the chain.

US 5,427,580 discloses splitting a conventional sprocket of an engine timing system into two portions, and then offsetting or phasing the portions with respect to one another. In another embodiment, the conventional single sprocket is replaced by a pair of sprockets that are phased relative to each other by half a pitch and are manufactured as a single unit. One of biggest problems with the single unit dual sprocket is the manufacturing cost and complexity. To produce each single unit, complex and extensive tooling using multiple PM tools are used, making the cost of producing a single unit very high.

US 5,816,968 discloses an idler sprocket assembly where at least two phased sprockets are placed on an idler shaft that are connected by a chain to drive the camshafts. The idler camshaft sprockets are manufactured separately and have internal keyways or teeth, which allow the sprockets to be placed on a spline or hub.

US 5,846,149 discloses a chain and sprocket system which includes phased sprockets. The phased sprockets may be formed of one single piece or of two single pieces fused together. The sprockets may be split into two portions and then the portions may be phased with respect to one another, with the number of sprockets varying.

US 5,980,406 discloses two identical sprockets that may be placed on a hub or shaft and are phased with respect to each other. The sprockets have projections and grooves on their inner circumferential surface. The projections or grooves are splines or keyways. The sprockets may also have splines on the face of the sprocket that extends radially, rather than on the inner circumferential surface of the sprocket.

US 6,267,701 discloses side-by-side sprockets of a phased chain system that are offset and where only one of the sprockets is secured to the drive shaft. The remaining sprocket is independently rotatably and does not transmit power to the shaft. The sprockets are phased with respect to each other.

US 6,413,180 discloses a first silent chain of the inverted tooth type having all the same links wrapped around a first sprocket and a second chain wrapped around a second sprocket. The first sprocket and the second sprocket are mounted in parallel on a drive shaft, and the teeth of the first sprocket are offset from the teeth of the second sprocket. The first and second chains only have a single pitch and the sprockets have a random pitch. The sprockets may be formed integrally or separate.

JP 01247858A discloses a first sprocket mounted on a shaft and a second identical sprocket is spline-engaged with a boss part of the sprocket. The boss part is coupled to the shaft by a slide clutch. The first sprocket and the second sprocket are phased with respect to each other.

JP62251564 discloses double row sprockets that are split into a pair of identical sprockets that are phased. The separation is in the axial direction.

### SUMMARY OF THE INVENTION

A multiple sprocket for transmission of power from a splined shaft to at least two chains, the multiple sprocket comprising a first half-sprocket and at least one second half- sprocket. The first half-sprocket has a toothed outer circumference for mating with a chain, an inner splined bore for mating with a shaft, and an integral raised portion and an opposing recessed portion on at least one face. The second half-sprocket has a toothed outer circumference for mating with a chain, an inner splined bore for mating with a shaft, and an integral raised portion and an opposing recessed portion on at least one face. The integral raised portion of the first half-sprocket is received by the recessed portion of the second half-sprocket and the recessed portion of the first half-sprocket receives the integral raised portion of the second half-sprocket, joining the first half-sprocket to the second half-sprocket in a phased relationship.

Alternatively, the first half-sprocket may have a raised flange with a spline on at least one face of the first half-sprocket. The second half-sprocket has an inner bore with at least one spline for mating with the raised flange. The inner bore and the at least one spline of the second half-sprocket fits outside and with the at least one spline of the raised flange of the first half-sprocket. The half-sprockets are rigidly joined in a phased relationship by brazing or high temperature sintering.

In a further embodiment, the inner bore with at least one spline of the first half-sprocket is a ¼ tooth space off relative to the toothed outer circumference of the first half-sprocket and the inner bore with at least one spline of the second half-sprocket is also a ¼ tooth space off relative to the toothed outer circumference of the second half-sprocket. When either the first half-sprocket or the second half-sprocket is flipped relative to the other, the faces of the first half-sprocket and the second half-sprocket meet, forming the multiple sprocket, where the first half-sprocket is phased relative to the second half-sprocket.

### BRIEF DESCRIPTION OF THE DRAWINGS

Fig. 1 shows two half-sprockets that form a multiple sprocket of a first embodiment, where the number of splines on the inner splined bore does not equal the number of teeth on the outer circumference of the half-sprockets.
Fig. 2 shows an exploded view of the first half-sprocket of the first embodiment of Figure 1.
Fig. 3 shows the alignment of the splines on the inner splined bore relative to the teeth on the outer circumference of the first half-sprocket of the second embodiment.
Fig. 4 shows two half-sprockets that form a multiple sprocket of a second embodiment, where the number of splines on the inner splined bore equals the number of teeth on the outer circumference of the half-sprockets.
Fig. 5 shows an alternative for securing two half-sprockets together to form a multiple half-sprocket of a third embodiment.
Fig. 6 shows fourth alternative for securing two half-sprockets together to form the multiple sprocket of a third embodiment.
Fig. 7 shows another alternate for securing two half-sprockets together to form the multiple sprocket of a fourth embodiment.
Fig. 8 shows a side profile of the assembled multiple sprocket.
Fig. 9 shows a front face view of the assembled multiple sprocket.

### DETAILED DESCRIPTION OF THE INVENTION

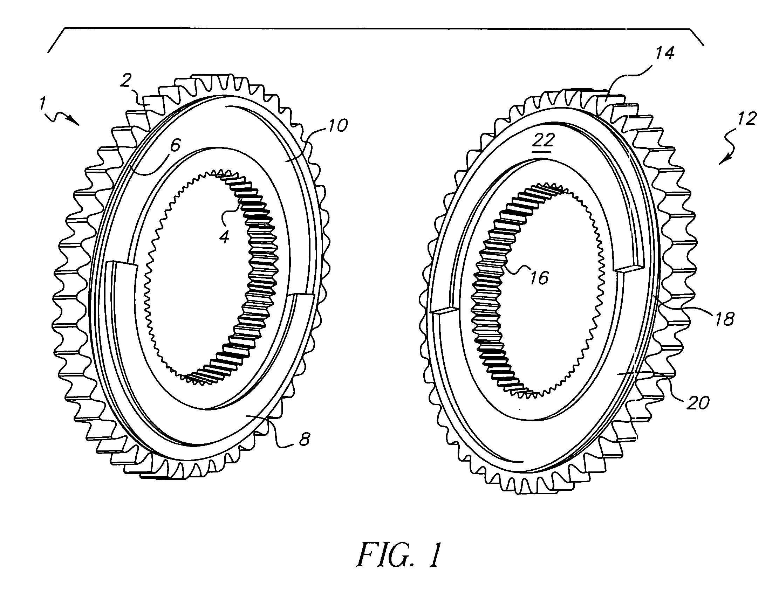

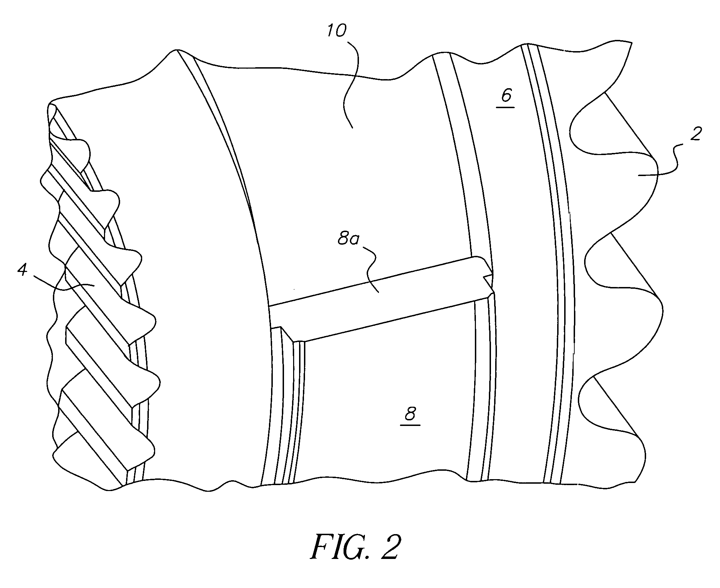

Referring to Figure 1, a first half-sprocket 1 has teeth 2 along its outer circumference for mating with a chain, an inner splined bore 4, and at least one face 6 with an integral raised portion 8, which in this case is semicircular and an opposing recessed portion 10, which in this case is also semicircular. Figure 2 shows an exploded view of where the face 8a of the integral raised portion 8 and the recessed portion 10 of the first half-sprocket 1 meet. A second single half-sprocket 12 also has teeth 14 along its outer circumference for mating with a chain, an inner splined bore 16, and at least one face 18 with an integral raised portion 22, which in this case is semicircular, and an opposing recessed portion 20, which in this case is also semicircular. The raised portions 8, 22 and the recessed portions 10, 20 are used to connect and orient the first half-sprocket 1 relative to the second half-sprocket 12, allowing for rapid assembly.

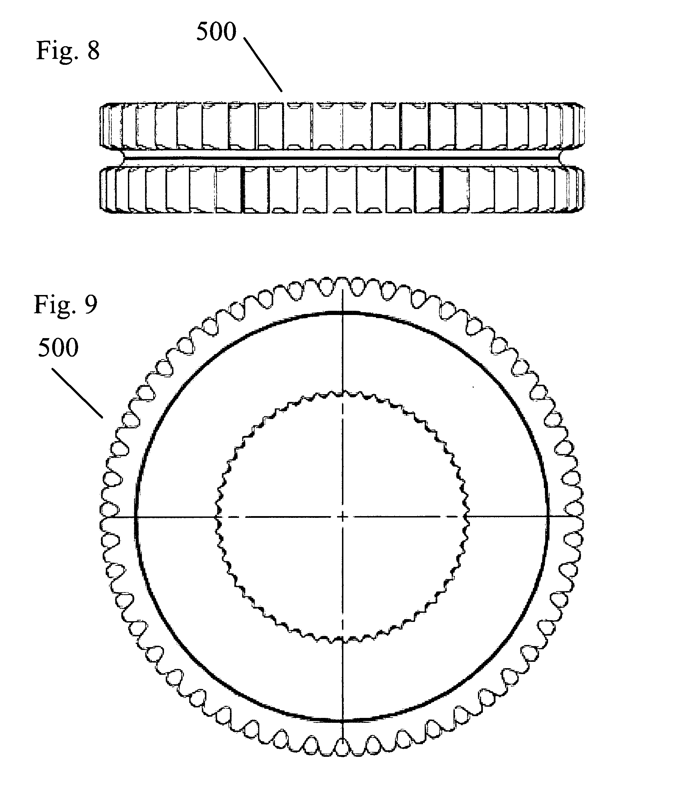

When the first and second single half-sprockets 1, 12 are fitted together, the recessed portion 10, in this case semicircular in shape, of the first half-sprocket 1 receives the integral raised portion 22 of the second half-sprocket 12 and likewise, the integral raised portion 8 of the first half-sprocket 1 is received by the recessed portion 20 of the second half-sprocket 12, forming multiple sprocket 500, as shown in Figures 8 and 9, for placement on a hub or drive shaft and mating with chains for the transmission of power. In the multiple sprocket 500, the first half-sprocket 1 is phased relative to the second half-sprocket 12 by a half step, although the phase difference between the first half-sprocket 1 and the second half-sprocket 12 may be greater or smaller the half a tooth. The clearance 502 is the distance between the toothed outer circumference 2 of the first half-sprocket 1 and the toothed outer circumference 14 of the second half-sprocket 12. The clearance 502 is also a direct relationship as to how well the first and second half-sprockets 1, 12 fit together. Ideally, the space between the integral raised portion 22 of the second half-sprocket 12 and the integral raised portion 8 of the first half-sprocket 1 is as close to zero as possible. The tighter the fit between the first and second half-sprockets 1, 12, the less that backlash occurs.

In this embodiment, the number of splines or teeth on the inner splined bores 4, 16 of the half sprockets 1, 12, are not equal to the number of teeth on the outer toothed circumferences 2, 14 of the half-sprockets 1, 12. When the two half-sprockets 1, 12, are joined together, the placement of the integral raised 8, 22 and recessed portions 10, 20, positions the toothed outer circumference of the half-sprockets 1, 12, a half a tooth apart from each other. The phase difference between the first half-sprocket 1 and the second half-sprocket 12 may be greater or smaller the half a tooth, with the appropriate alterations made to the placement of the integral raised portions 8, 22 and the recessed portions 10, 20.

The first and second half-sprockets 1, 12 may be symmetrical about a vertical axis on the faces 6, 18 perpendicular to an axis of rotation of the half-sprocket or asymmetrical about a horizontal axis on the faces 6, 18 parallel to the axis of rotation of the half-sprocket. The half-sprockets 1, 12 may also be made up of multiple pieces. If the half-sprockets are symmetrical, the pieces used to assemble each of the single half-sprockets would be interchangeable. The first and second half-sprockets 1, 12 are not physically locked in place, and are loosely mounted on the same shaft, however a snap ring (not shown) may be utilized to maintain the axial relationships.

By using two single half-sprockets 1, 12 to form a multiple sprocket 500, the tooling used to produce the single half-sprockets 1, 12 can be reduced in number, less complex, and decrease assembly time resulting in an inexpensive phased multiple sprocket 500 that keeps noise levels low.

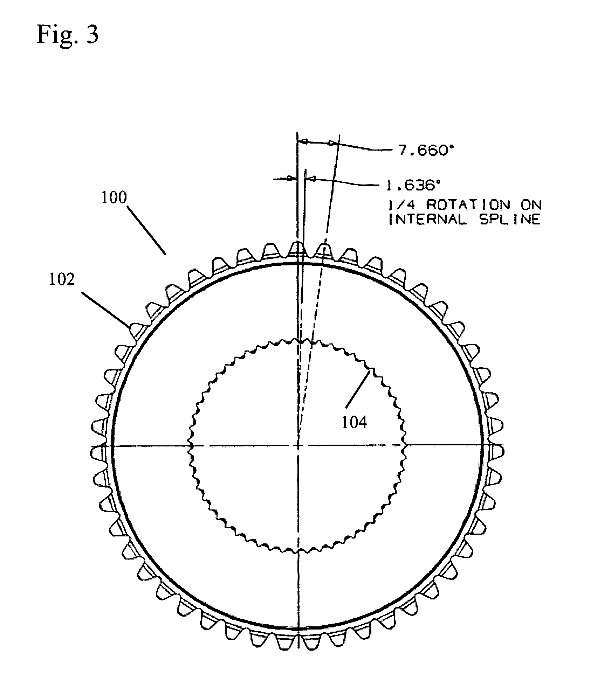

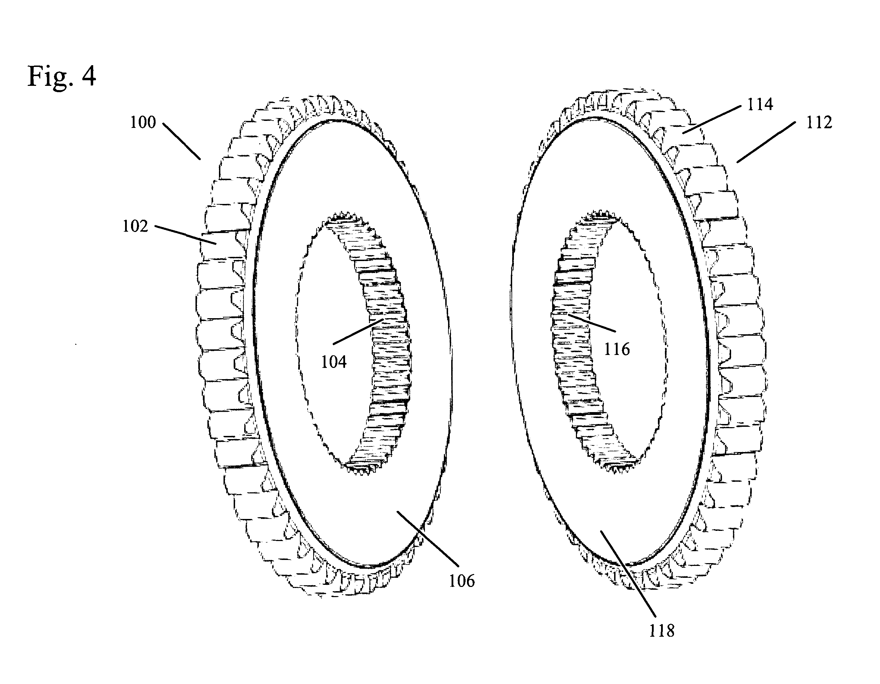

In a second embodiment, shown in Figure 4, a first half-sprocket 100 has teeth 102 along its outer circumference for mating with a chain, an inner splined bore 104 with at least one spline and at least one face 106. A second single half-sprocket 112 also has teeth 114 along its outer circumference for mating with a chain, an inner splined bore 116 with at least one spline, and at least one face 118. The inner splined bores 104 and 116 are used to set the phase difference. As shown in Figure 3, the inner splined bore 104 is a ¼ tooth, or spline space off relative to the center alignment of the outer toothed circumference 102 of the first half-sprocket 100. The second half-sprocket 112 has the same inner splined bore 106 with the ¼ tooth spacing relative to the toothed outer circumference 114. When the first half-sprocket 100 is reversed and joined with the second half-sprocket 212, the toothed outer circumference 102 of the first half sprocket 100 is half a tooth off from the toothed outer circumference 114 of the second half sprocket 112, forming multiple sprocket 500 as shown in Figures 8 and 9, for placement on a hub or drive shaft and mating with chains for the transmission of power, the toothed outer circumference 102 of the first half sprocket 100 is half a tooth off from the toothed outer circumference 114 of the second half sprocket 112. The phase difference between the first half-sprocket 100 and the second half-sprocket 112 may be greater or smaller than half a tooth, with the proper adjustments made to the tooth or spline spacing on the inner splined bore.

In this embodiment, the number of splines or teeth on the inner splined bores 104, 116 of the half sprockets 100, 112, are equal to the number of teeth on the outer toothed circumferences 102, 114 of the half-sprockets 100, 112. The first and second half-sprockets 100, 112 may be symmetrical about a vertical axis on the faces 106, 118 perpendicular to an axis of rotation of the half-sprocket or asymmetrical about a horizontal axis on the faces 106, 118 parallel to the axis of rotation of the half-sprocket. The half-sprockets 100, 112 may also be made up of multiple pieces. If the half-sprockets are symmetrical, the pieces used to assemble each of the single half-sprockets would be interchangeable. The first and second half-sprockets 100, 112 are not physically locked in place, and are loosely mounted on the same shaft, however a snap ring (not shown) may be utilized to maintain the axial relationships.

By using two single half-sprockets 110, 112 to form a multiple sprocket 500, the tooling used to produce the single half-sprockets 100, 112 can be reduced in number, less complex, and decrease assembly time resulting in an inexpensive phased multiple sprocket 500 that keeps noise levels low.

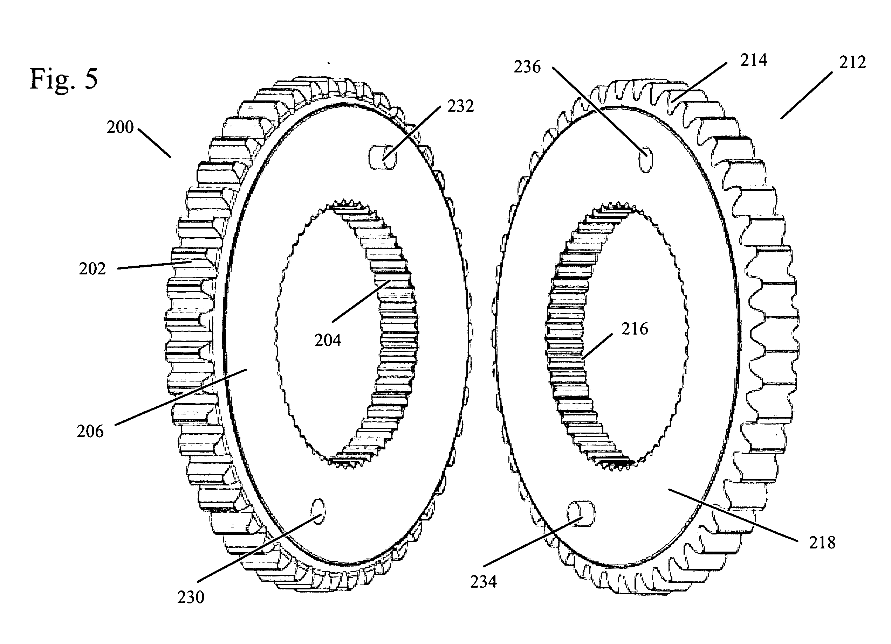

In a third embodiment, shown in Figure 5, a first half-sprocket having teeth 202 along its outer circumference for mating with a chain, an inner splined bore 204, and at least one face 206 with a recessed portion 230, in this case, in the form of a punched hole and an opposing integral raised portion 232, which in this case is a pin. A second single half-sprocket 212 also has teeth 214 along its outer circumference for mating with a chain, an inner splined bore 216, and at least one face 218 with an integral raised portion 234, which in this case is a pin and an opposing recessed portion 236, in this case a punched hole, are used to join and orient the first half sprocket 200 relative to the second half-sprocket 212, allowing for rapid assembly.

When the first half-sprocket 200 is reversed or flipped (towards you as you view the Figure), the two faces 206, 218 of the first half-sprocket 200 and the second half-sprocket 212 meet, and a single multiple sprocket 500 results, as shown in Figures 8 and 9, where the first half-sprocket 200 is phased relative to the second half-sprocket 212. The closer and better the fit between the integral raised portion 232, 234 and the recessed portion 230, 220 of the two half-sprockets 200, 212, the less backlash that occurs.

The inner splined bores 204 and 216 are used to set the phase difference. Similar to the first embodiment, the inner splined bore 204 is a ¼ tooth, or spline space off relative to the center alignment of the outer toothed circumference 202 of the first half-sprocket 200. The second half-sprocket 212 has the same inner splined bore 206 with the ¼ tooth spacing relative to the toothed outer circumference 214. When the first half-sprocket 200 is reversed and joined with the second half-sprocket 212, the toothed outer circumference 202 of the first half sprocket 200 is half a tooth off from the toothed outer circumference 214 of the second half sprocket 212. The phase difference between the first half-sprocket 200 and the second half-sprocket 212 may be greater or smaller than half a tooth, with the proper adjustments made to the tooth or spline spacing on the inner splined bore. Alternatively, similar to the second embodiment, the number of teeth on the toothed outer circumference 202, 214 of the half-sprockets 200, 212 may be equal to the number of splines or teeth on the inner splined bores 204, 216 of the half-sprockets 200, 212. When the two half-sprockets 200, 212, are joined together, the placement of the integral raised portions 232, 234 and the recessed portions 230, 236, positions the toothed outer circumference of the half-sprockets 200, 212, a half a tooth apart from each other.

The first and second half-sprockets 200, 212 may be symmetrical about a vertical axis on the faces 206, 218 perpendicular to an axis of rotation of the half-sprocket or asymmetrical about a horizontal axis on the faces 206, 218 parallel to the axis of rotation of the half-sprocket. The half-sprockets 200, 212 may also be made up of multiple pieces. If the half-sprockets are symmetrical, the pieces used to assemble each of the single half-sprockets would be interchangeable. The first and second half-sprockets 200, 212 are not physically locked in place, and are loosely mounted on the same shaft, however a snap ring (not shown) may be utilized to maintain the axial relationships.

By using two single half-sprockets 200, 212 to form a multiple sprocket 500, the tooling used to produce the single half-sprockets 200, 212 can be reduced in number, less complex, and decrease assembly time resulting in an inexpensive phased multiple sprocket 500 that keeps noise levels low.

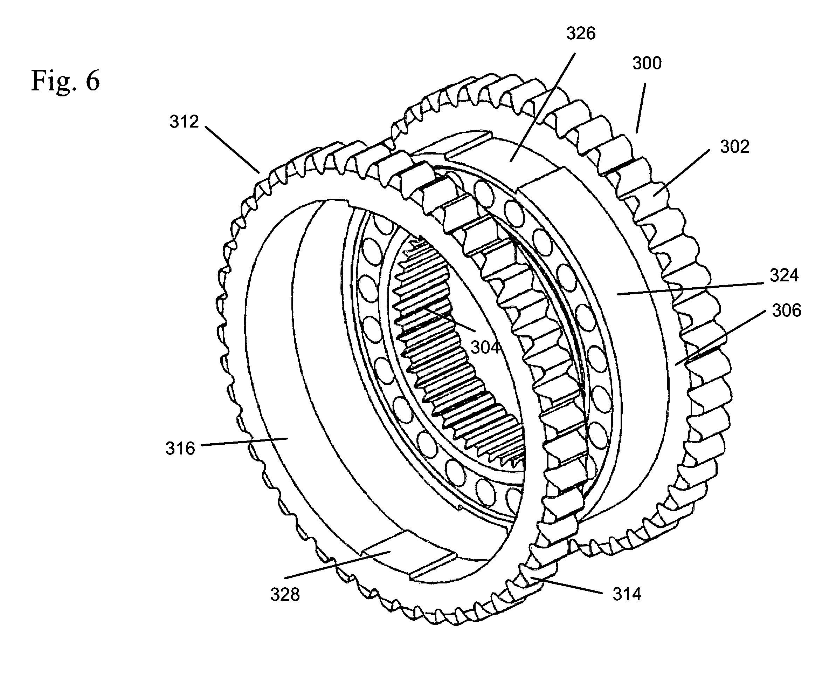

Figure 6 shows a fourth embodiment of the present invention. A first single half-sprocket 300 made of powdered metal has teeth 302 along its outer circumference for mating with a chain, and an inner splined bore 304, and at least one face 306 with an integral raised flange 324 with at least one spline or keyway 326 on the raised flange 324. A second half-sprocket 312 also made of powdered metal has teeth 314 along its outer circumference for mating with a chain, and an inner bore 316 with at least one spline or key 328 for mating with the raised flange 324 of the first half-sprocket 300. The splines or keyways 326 on the raised flange 324 and the splines or keys 328 are used to connect and orient the first half-sprocket 300 relative to the second half-sprocket 312. The half-sprockets 300, 312 are then attached rigidly by brazing or high temperature sintering. In either case, the resultant multiple sprocket 500 may be rapidly assembled. If the half-sprockets 300, 312 are joined rigidly by high temperature sintering, the powdered metal comprising the first half-sprocket 300 may have properties that allow it to expand at one rate when heated and the second half-sprocket 312 made of powdered metal may have properties that allow it to expand when heated at a rate smaller than that of the first half-sprocket 300.

When the two half-sprockets 300, 312 are fitted together, the splines or keys 328 on the inner bore 316 of the second half-sprocket 312 are received by the splines or keyways 326 on the raised flange 324 of the first half-sprocket 300 form a single multiple sprocket 500, as shown in Figures 8 and 9, for placement on a hub or drive shaft and mating with chains for transmission of power, where the first half-sprocket 300 is phased relative to the second half-sprocket 312 and the half-sprockets are rigidly joined to each other by brazing or high temperature sintering. Other methods of rigidly joining the half-sprocket include heat shrinking and welding.

The clearance 502 is the distance between the toothed outer circumference 302 of the first half-sprocket 300 and the toothed outer circumference 314 of the second half-sprocket 312, and the clearance is a direct relationship as to how well the first and second half-sprockets 300, 312 fit together.

By using two single half-sprockets 300, 312 to form a multiple sprocket 500, the tooling used to produce the single half-sprockets 300, 312 can be reduced in number, less complex, and decrease assembly time resulting in an inexpensive phased multiple sprocket 500 that keeps noise levels low.

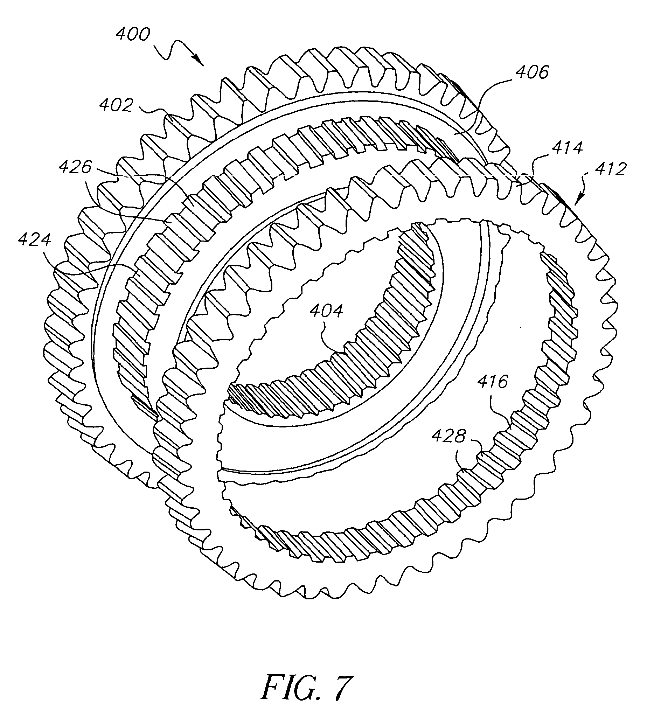

Referring to Figure 7, another alternative embodiment, a first half-sprocket 400 made of powdered metal has teeth 402 along its outer circumference for mating with a chain, an inner splined bore 404, and at least one face 406 with an integral raised flange 424 which has multiple splines or keyways 426. A second half-sprocket 412 also made of powdered metal has teeth 414 along its outer circumference for mating with a chain and an inner bore 416 with multiple splines or keys 428. The raised flange 424 and the inner bore 416 with multiple splines or keys 428 are used to connect and orient the first half-sprocket 400 relative to the second half-sprocket 412. The half-sprockets 400, 412 are then attached rigidly by brazing or high temperature sintering. In either case, the resultant multiple sprocket 500 may be rapidly assembled. If the half-sprockets 400, 412 are joined rigidly by high temperature sintering, the powdered metal comprising the first half-sprocket 400 may have properties that allow it to expand at one rate when heated and the second half-sprocket 412 made of powdered metal may have properties that allow it to expand when heated at a rate smaller than that of the first half-sprocket 400.

When the two half-sprockets 400, 412 are fitted together, the integral raised flange 424 with multiple splines or keyways 426 of the first half-sprocket 400 receives the multiple splines or keys 428 of the inner bore 416 of the second half-sprocket 412, forming a multiple sprocket 500, as shown in Figures 8 and 9, for placement on a hub or drive shaft and receiving chains that transmit power and the first half-sprocket 400 is phased relative to the second half-sprocket 412 and the half-sprockets are rigidly joined to each other by brazing or high temperature sintering. Other methods of rigidly joining the half-sprocket include heat shrinking and welding.

The clearance 502 is the distance between the toothed outer circumference 402 of the first half-sprocket 400 and the toothed outer circumference 414 of the second half-sprocket 412, and the clearance is a direct relationship as to how well the first and second half-sprockets 400, 412 fit together.

By using two single half-sprockets 400, 412 to form a multiple sprocket 500, the tooling used to produce the single half-sprockets 400, 412 can be reduced in number, less complex, and decrease assembly time resulting in an inexpensive phased multiple sprocket 500 that keeps noise levels low.

### Example

Referring to Table 1, a conventional sprocket paired with a random chain, a Gemini one piece sprocket, and a spline phased sprocket were all tested using four center mics at speed range averages of 500 to 300 RPM. Two tests were performed on each chain and sprocket assembly and an average of the two tests conducted for each was calculated. The pitch frequency for the spline phased sprocket of the present invention was 1.9 dBA higher and the overall level was 0.3 d BA higher than the one piece Gemini sprocket system, which to the human ear is indiscernible. The spline phased sprocket shows an average improvement of 10.8 dBA for pitch frequency and 1.8 dBA for overall noise. As shown below, the spline phased sprocket still provides a significantly lower level of noise than the conventional random chain.

**Table 1**

| Chain System Description | Pitch Frequency Speed Range Average (SRA) (dBA) | Second Harmonic Speed Range Average (SRA) (dBA) | Overall Level Speed Range Average (SRA) (dBA) |
|---|---|---|---|
| Conventional Random Chain and Conventional Sprocket Test #1 | 60.9 | 43.7 | 73.2 |
| Conventional Random Chain and Conventional Sprocket Test #2 | 60.8 | 44.0 | 73.3 |
| Two Test Average | 60.9 | 43.9 | 73.2 |
| Gemini Production One Piece Sprockets | 48.3 | 42.5 | 71.0 |
| One Piece Sprockets Test #1 | | | |
| Gemini Production One Piece Sprockets Test #2 | 48.0 | 42.5 | 71.4 |
| Two Test Average | 48.2 | 42.5 | 71.2 |
| Spline Phased Sprocket Test #1 | 50.5 | 43.0 | 71.4 |
| Spline Phased Sprocket Test #2 | 49.7 | 43.1 | 71.6 |
| Two Test Average | 50.1 | 43.0 | 71.5 |

As shown by the above example, the noise of the multiple sprocket comprised of single half-sprockets offers lower production costs, easier tooling, manufacturing, and in comparison to the prior art one piece sprockets, comparable noise levels.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A multiple sprocket for transmission of power from a splined shaft to at least two chains, the multiple sprocket comprising:
a first half-sprocket having a toothed outer circumference for mating with a chain, an inner splined bore for mating with the splined shaft, and a raised flange on at least one face of the first half-sprocket with at least one spline;
at least one second half-sprocket having a toothed outer circumference for mating with a chain and an inner bore with at least one spline for mating with the raised flange; and
wherein the inner bore and the at least one spline of the second half-sprocket fits outside and with the at least one spline of the raised flange of the first half-sprocket, joining the first half-sprocket to the second half-sprocket in a phased relationship.

2. The multiple sprocket of claim 1, wherein the first half-sprocket and the second half-sprocket are comprised of powdered metal.

3. The multiple sprocket of claim 1, wherein the joining of the first half-sprocket to the second half-sprocket is rigid.

4. The multiple sprocket of claim 2, wherein the rigid joining of the first half-sprocket to the second half-sprocket is by brazing.

5. The multiple sprocket of claim 2, wherein the rigid joining of the first half-sprocket to the second half-sprocket is by high temperature sintering.

6. The multiple sprocket of claim 1, further comprising a clearance between the toothed outer circumference of the first half-sprocket and the toothed outer circumference of the second half-sprocket.

7. The multiple sprocket of claim 1, wherein the first half-sprocket is phased a half pitch from the second half-sprocket.

8. The multiple sprocket of claim 1, wherein the first half-sprocket is phased less than a half pitch from the second half-sprocket.

9. The multiple sprocket of claim 1, wherein the first half-sprocket is phased greater than a half pitch from the second half-sprocket.

10. A multiple sprocket for transmission of power from a splined shaft to at least two chains, the multiple sprocket comprising:
a first half-sprocket having a toothed outer circumference for mating with a chain, an inner bore with at least one spline for mating with the splined shaft, and a integral raised portion and an opposing recessed portion on at least one face of the half-sprocket;
at least one second half-sprocket having a tooth outer circumference for mating with a chain, an inner bore with at least one spline for mating with the splined shaft, and a and a integral raised portion and an opposing recessed portion on at least one face of the half-sprocket; and
wherein the integral raised portion of the first half-sprocket is received by the recessed portion of the second half-sprocket and the recessed portion of the first half-sprocket receives the integral raised portion of the second half-sprocket, joining the first half-sprocket to the second half-sprocket in a phased relationship.

11. The multiple sprocket of claim 10, wherein the first half-sprocket is symmetrical about a vertical axis on the at least one face of the first half-sprocket which is perpendicular to an axis of rotation of the first half-sprocket.

12. The multiple sprocket of claim 10, wherein the first half-sprocket is asymmetrical about a horizontal axis on the at least one face of the first half sprocket, which is parallel to an axis of rotation of the first half-sprocket.

13. The multiple sprocket of claim 10, wherein the second half-sprocket is symmetrical about a vertical axis on the at least one face of the second half-sprocket which is perpendicular to an axis of rotation of the first half-sprocket.

14. The multiple sprocket of claim 10, wherein the second half-sprocket is asymmetrical about a horizontal axis on the at least one face of the second half-sprocket, which is parallel to an axis of rotation of the second half-sprocket.

15. The multiple sprocket of claim 10, further comprising a snap ring axially locking the first half-sprocket relative to the second half-sprocket.

16. The multiple sprocket of claim 10, further comprising a clearance between the toothed outer circumference of the first half-sprocket and the toothed outer circumference of the second half-sprocket.

17. The multiple sprocket of claim 10, wherein the at least one spline of the inner bore of the first half-sprocket is not equal in number to the teeth of the toothed outer circumference of the first half-sprocket.

18. The multiple sprocket of claim 10, wherein the at least one spline of the inner bore of the second half-sprocket is not equal in number to the teeth of the toothed outer circumference of the second half-sprocket.

19. The multiple sprocket of claim 10, wherein the integral raised portion is a pin.

20. The multiple sprocket of claim 10, wherein the recessed portion is a punched hole.

21. The multiple sprocket of claim 10, wherein the integral raised portion is semicircular.

22. The multiple sprocket of claim 10, wherein the recessed portion is semicircular.

23. The multiple sprocket of claim 10, wherein the first half-sprocket is phased a half pitch from the second half-sprocket.

24. The multiple sprocket of claim 10, wherein the first half-sprocket is phased less than a half pitch from the second half-sprocket.

25. The multiple sprocket of claim 10, wherein the first half-sprocket is phased greater than a half pitch from the second half-sprocket.

26. A method of making multiple sprockets for transmission of power from a splined shaft to at least two chains, the steps comprising
a) fitting an inner bore of a second half-sprocket with at least one spline;
b) fitting at least one spline on a raised flange of a first half-sprocket; and
c) rigidly joining the first half-sprocket relative to the second half-sprocket by a metallurgy process, such that the at least one spline of the second half-sprocket is received by the at least one spline on the raised flange of the first half-sprocket.

27. The method of claim 26, wherein the metallurgy process is brazing.

28. The method of claim 26, wherein the metallurgy process is high temperature sintering.

29. The method of claim 26 wherein the metallurgy process is welding.

30. The method of claim 26, wherein the metallurgy process is heat shrinking.

31. A multiple sprocket for transmission of power from a splined shaft to at least two chains, the multiple sprocket comprising:
a first half-sprocket having a toothed outer circumference for mating with a chain, at least one face, and an inner bore with at least one spline for mating with the splined shaft, wherein the at least one spline of the inner bore of the first half-sprocket is a ¼ tooth space off relative to the toothed outer circumference of the first half-sprocket;
a second half-sprocket having a toothed outer circumference for mating with a chain, at least one face, an inner bore with at least one spline for mating with the splined shaft, wherein the at least one spline of the inner bore of the second half-sprocket is ¼ tooth space off relative to the toothed outer circumference of the second half-sprocket; and
wherein either the first half-sprocket or the second half-sprocket is flipped relative to the other, and the at least one face of the first half-sprocket meets the at least one face of the second half-sprocket, joining the first half-sprocket to the second half-sprocket in a phased relationship.

32. The multiple sprocket of claim 31, further comprising a clearance between the toothed outer circumference of the first half-sprocket and the toothed outer circumference of the second half-sprocket.

33. The multiple sprocket of claim 31, wherein the first half-sprocket is symmetrical about a vertical axis on the at least one face of the first half-sprocket which is perpendicular to an axis of rotation of the first half-sprocket.

34. The multiple sprocket of claim 31, wherein the first half-sprocket is asymmetrical about a horizontal axis on the at least one face of the first half sprocket, which is parallel to an axis of rotation of the first half-sprocket.

35. The multiple sprocket of claim 31, wherein the second half-sprocket is symmetrical about a vertical axis on the at least one face of the second half-sprocket which is perpendicular to an axis of rotation of the first half-sprocket.

36. The multiple sprocket of claim 31, wherein the second half-sprocket is asymmetrical about a horizontal axis on the at least one face of the second half-sprocket, which is parallel to an axis of rotation of the second half-sprocket.

37. The multiple sprocket of claim 31, wherein the first half-sprocket is phased a half pitch from the second half-sprocket.

38. The multiple sprocket of claim 31, wherein the at least one spline of the inner bore of the first half-sprocket is equal in number to the teeth of the toothed outer circumference of the first half-sprocket.

39. The multiple sprocket of claim 31, wherein the at least one spline of the inner bore of the second half-sprocket is equal in number to the teeth of the toothed outer circumference of the second half-sprocket.

40. The multiple sprocket of claim 31, wherein the first half-sprocket is phased less than a half pitch from the second half-sprocket.

41. The multiple sprocket of claim 31, wherein the first half-sprocket is phased greater than a half pitch from the second half-sprocket.
